# EUROPEAN PATENT APPLICATION

(11) **EP 1 074 676 A2**
(43) Date of publication of application: **07.02.2001**
(21) Application number: 00500162.3
(22) Date of filing: 21.07.2000
(51) Int. Cl.: E04F 15/10, B32B 27/32, D06N 3/04

(54) **Compound floor covering, especially for sports, children and livestock-rearing use, and method for making said floor covering**

(30) Priority: 30.07.1999 ES 9901728
(71) Applicant: PEMARSA, S.A., 03690 San Vicente del Raspeig, Alicante (ES)
(72) Inventor: Colom Valiente, Jaime, 03690 San Vicente del Raspeig (ES)
(74) Representative: Ponti Sales, Adelaida

(57) **Abstract**

It comprises a plurality of superimposed layers of polymerisation resins, with at least one of the layers being the covering layer and another of the layers being the base layer, characterised in that the polymerisation resin of the various layers is a polymer, a copolymer or a terpolymer of polyolefin, the cover layer or layers comprising between 1% and 40% of vinyl acetate, with densities between 0.9 and 1.5 g/cm³ and hardnesses of Shore A 30 to 90°, while the foamed base layer has between 18% and 70% vinyl acetate, with densities ranging between 0.1 and 0.6 g/cm³ and hardnesses between Shore A 7 and 70°.

## Description

This invention relates to a compound floor covering, especially for sports, child (schools, nurseries, parks and private houses), and for livestock use, which in the first field of application permits high energy absorption to be achieved together with high abrasion and tear resistance, while in the second field of application it permits high comfort to be achieved, together with the resistance to abrasion and tearing necessary for the use.

The invention also relates to the method for making a floor covering of this type.

### BACKGROUND OF THE INVENTION

Different types of compound floor coverings are known in the prior art, applied to floors for sports use.

US patent 4,199,639 relates to a double-layer floor covering made up of an upper layer of synthetic polymer fibre (made up of polypropylene, polyester or polyamide) and a lower layer of cellular polyethylene. The object of this patent was to overcome the problems existing on sports-ground floors which had elasticity but did not have a shock-absorption or energy-absorption effect. According to this patent, the upper layer is permeable and resistant to corrosion, and prevents slippage even when wet, due to the high density of the needlework of the fabric. Sliding is also reduced due to the energy absorption that is carried out by the lower layer.

In order to achieve good permeability in open-air sports-ground floors, the lower layer is perforated. The two layers are joined together by hot welding.

Floor coverings of this type present limited energy absorption capacity due to the characteristics of the polyethylene foam. Furthermore, the upper layer is a fabric that does not have high tear resistance, for when it receives an impact the threads tend to separate.

Patent FR 2 600 348 relates to a floor covering, especially for sports tracks, and their joining method. The floor covering comprises three layers: a lower layer of polyethylene foam to absorb impact, with a density of 30 kg/m3; an intermediate layer of a polyester resin with fibre-glass laminate, to distribute impact forces; and an upper layer of elastomer to receive the impact of blows. In addition to the purposes described, the choice of materials for the layers had the object of achieving good adherence between the layers.

In this case, the same remarks are applicable as in the case of the patent of the previous paragraph in relation to energy absorption, since polyethylene foam is also used. Abrasion and tear resistance are also low due to the characteristics of the elastomer of the upper layer.

Patent DE 4342200 relates to a floor covering for sports use comprising an intermediate or base layer of polyethylene foam, which is more rigid and is situated between two external or cover layers, of polyethylene foam, which are more elastic. The coefficient of elasticity of the cover layer or layers is 250-350 N/mm2 in the longitudinal direction and 270-330 N/mm2 in the lateral direction, while that of the intermediate or base layer is 70-80 N/mm2 in the longitudinal direction and 85-90 N/mm2 in the lateral direction. According to said patent, thanks to the arrangement of the layers good shock-absorption and good elasticity are achieved at low cost. The two different layers are of approximately the same thickness, and not generally very thick, since the floor covering can be rolled up.

In this case the upper layer is the more elastic one and has little abrasion and tear resistance, due to the characteristics of the polyethylene foam. Moreover, energy absorption is also limited due to the characteristics of the polyethylene foam, especially if the rigidity of the base layer is taken into account.

Also known in the art is the use of ethylene-vinyl acetate (EVA) in compound floor coverings for sports use. In particular, patent EP 0 621 128 comprises a plurality of layers, with the lower one being a spongy layer on an EVA base.

### DESCRIPTION OF THE INVENTION

The compound floor covering of the invention manages to resolve the aforesaid disadvantages, the floor covering for gymnasiums presenting high abrasion and tear resistance together with high energy absorption, while the livestock floor covering offers much improved comfort thanks to the overall hardness of the compound, while retaining the physical properties required for use, which consists in the fact that the animals stand and lie down on the same covering. The compound floor covering of the invention also has other advantages which will be described.

The compound floor covering of the invention, especially for sports, child and livestock use, is characterised in that the polymerisation resin of the various layers is a polymer, a copolymer or a terpolymer of polyolefin, the cover layer or layers comprising between 1% and 40% of vinyl acetate, with densities between 0.9 and 1.5 g/cm³ and hardnesses of Shore A 30 to 90°, while the foamed base layer has between 18% and 70% vinyl acetate, with densities ranging between 0.1 and 0.6 g/cm³ and hardnesses between Shore A 7 and 70° .

The cover layer is of higher density and hardness and has high abrasion and tear resistance; the base layer is foamed and of lower density and hardness, with high energy absorption capacity, being especially indicated for application thereof in gymnasiums. For livestock use, high comfort is achieved. The aforesaid advantages are therefore combined in a single floor covering.

The floor covering of the invention thus has two different layers: one base layer and another covering layer, which can be arranged on only one side of the base layer (in which case the floor covering consists of two layers) or on both sides of the base layer (in which case the floor covering consists of two layers).

Advantageously, the base layer has at least double the thickness of the covering layer or of each of the covering layers. Owing to this arrangement, the energy absorption capacity of the base layer is increased.

According to one embodiment of the invention the base layer comprises between 70% and 90% of the total thickness, which means that the energy-absorption effect is greater still.

Also advantageously, the covering and/or base layers comprise a natural or synthetic mineral layer and/or textile fibre layer.

Preferably, the covering layer or layers have a density of between 0.1 and 1.3 g/cm³ and the base layer has a density of between 0.2 and 0.5 g/cm³.

Advantageously, the polymerisation resin is modified with elastomers and is crosslinked with peroxides or by radiation.

Preferably, the polymerisation resin is a copolymer of ethylene-vinyl acetate (EVA).

According to a preferred embodiment, the base layer is made up of ground residues of foam of polymers agglomerated with or without a binding mixture. This permits the recovery of a large part of the residues produced in the manufacturing of products from polymer foams, such as the soles of shoes and the like.

Preferably, the binding mixture can be a mixture based on polyurethane, an emulsion of EVA copolymer or terpolymer, natural rubber, styrene-butadiene, nitrylic and/or chloroprene, all of them solid, in dispersion or in solution; copolymers or terpolymers of EVA with mineral oils, natural and/or synthetic thermoplastic or heat-stable resins.

Preferably, the polymer of the residues is EVA and the binding mixture is obtained from aliphatic resin and EVA copolymer with a vinyl acetate content exceeding 25% and fluidity exceeding 2 g/10 min.

According to another embodiment of the invention, the covering layer is a microcellular foam of EVA copolymer with 18% vinyl acetate reinforced with a mineral filler of siliceous and carbonate type, crosslinked with peroxide and foamed with azodicarbonamide up to a density of between 0.12 and 0.30 g/cm³ and a hardness that ranges between ShA 30 and 60°.

According to this same embodiment, the base layer is a microcellular foam of EVA copolymer with 28% vinyl acetate modified with polyisoprene rubber and plastified with mineral oil, crosslinked with peroxide and foamed with azodicarbonamide up to a density between 0.12 and 0.30 g/cm³ and a hardness that ranges between ShA 5 and 20°. This embodiment is especially indicated for livestock since it affords them high comfort together with the abrasion and tear resistance necessary for use.

The method for the manufacturing of compound floor coverings of the invention consists in:
a) Mixing separately polymerisation resins with other components such as fillers, crosslinking agent, expanding agent, pigments and additives, of each one of the layers.
b) Laminating said mixtures in order to make each one of the preforms.
c) Carrying out the crosslinking and expansion of the preform for the base layer.
d) Crosslinking the preform corresponding to the covering layer or layers and simultaneous joining of the covering layer or layers by hot welding to the base layer.

The crosslinking and union by hot welding are known techniques. The invention consists in the simultaneous carrying out of said two processes, that is, the crosslinking and the hot welding are carried out in a single operation.

Thanks to this method, a perfect union between the layers is achieved.

In order to favour the union of the layers, the crosslinking of the base layer is not implemented completely. Preferably, the crosslinking of the base layers is carried out up to a maximum crossover percentage of 80%. Moreover, the base layer comprises a maximum of 20 parts of filler for 100 of polymer.

There follows a description in three specific examples of three different embodiments of the floor covering of the invention.

### Example 1

This example describes a compound floor covering for formation of a rectangular tile of 5 to 40 mm thickness and approximately 2500 cm² surface area, made up of a base layer (BL) of low density, which occupies 70-90% of the total thickness, and a covering layer (which constitutes the use surface) of high density, which occupies the remaining thickness.

The perimeter is cut in a interlockable dovetail pattern.

The BL is made up of a closed-cell microcellular foam. The solid phase comprises ethylene-vinyl acetate (EVA) copolymer and elastomers, crosslinked with peroxides, reinforced with mineral fillers and pigmented with organic and inorganic pigments. The gas phase of the foam is made up of nitrogen with traces of ammonia and makes up between 50% and 80% of the volume depending on the density, which can range between 0.2 and 0.5 g/cm³. The hardness of the foam can range between Sh°A 20 and 60.

The covering layer (CL) is a mixture the same as the previous one but unfoamed, with a higher degree of crosslinking and different pigmentation, with a density between 1.0 and 1.3 g/cm³.

In both the BL and the CL the mineral fillers can be of siliceous and/or calcareous types for non-fire-resistant tiles, or of the hydrated alumina type for tiles with M-3 or M-2 classification according to standard UNE 23-727-90 1R. For this requirement, the mixtures are also modified with phosphorated additive compounds of antimony, borates and/or halogenated compounds.

The manufacturing method comprises a first stage of making preforms, a second phase of making the base layer and a third phase of making the compound tile.

The first phase involves, according to the known method, mixing polymers, fillers, peroxides, expanding agent, pigments and additives, both for making the base layer and the covering layer separately. This mixture is laminated in a calender to make the preforms, which are rectangular sheets 2 to 3 mm thick.

In the second phase a preform is loaded into a mould and the base compound is crosslinked and expanded by heating to 165°C for a time that depends on its thickness and at a specific pressure of 60 kg/cm².

Thus, a microcellular foam is obtained.

In the third phase the necessary number of preform sheets of the covering layer is loaded in order to achieve the desired final thickness, and on these is placed the base layer sheet made following the method described above, and finally another preform the same as the first covering layer is put in place. The process of crosslinking of the covering layer is then carried out with hot soldering thereof to the base layer for a time that depends on the thickness of the covering layer, at a pressure between 30 and 40 kg/cm² and at a temperature of 165°C. After this, the plate obtained is cut down the middle and the edge cut to form interlockable dovetails.

Below is an outline of the results obtained by comparing a floor covering of the type of example 1 just described (which shall be designated as floor covering A), having the following characteristics:

| covering layer | | base layer |
|---|---|---|
| thickness | 2 mm | 16 mm |
| density | 1.23 g/cm³ | 0.2 g/cm³ |
| hardness | ShA 80° | ShA 28° |

and a floor covering (which shall be designated as floor covering B) with two layers of foamed polyethylene, having the following characteristics:

| covering layer | | base layer |
|---|---|---|
| thickness | 2 mm | 2 mm |
| density | 0.05 g/cm³ | 0.05 g/cm³ |
| hardness | ShA 20° | ShA 20° |
| elasticity | 260 N/mm² | 80 N/mm² |

The result obtained was as follows:

| | Energy Absorption | Abrasion resistance | Tear resistance (loss of volume) |
|---|---|---|---|
| | (UNE-EN 344) Joules | (UNE 53516) N/mm | (UNE 53527) mm³ |
| Floor covering A | 16 | 34 | 150 |
| Floor covering B | 5 | 1 | 500 |

### Example 2

This example describes a compound floor covering for the formation of a rectangular tile with a thickness of 5 to 40 mm and a surface area of approximately 2500 cm², made up of a recycled base layer which occupies 70-90% of the total thickness and a covering layer (which constitutes the use surface and has no recycled materials) of high density, which occupies the remaining thickness.

The perimeter is cut into interlockable dovetail shapes.

The base layer is made up of pieces of ground polyolefin foam residues, with granulometry between 1 and 5 mm (scrap) and agglomerated directly or with a binding mixture according to type of polyolefin. In case of using a binding mixture, this would be made from an aliphatic resin and EVA copolymer with high vinyl acetate content and high fluidity.

The covering layer is identical to that described in Example 1.

The manufacturing method comprises a first stage of making preforms of the covering layer, a second phase of making the base layer and a third phase of making the compound tile.

The first phase is the same as for the method described in Example 1.

In the second phase the base layer is obtained in the following way.

The base material comes from offcuts of crosslinked and foamed EVA sheets, which are triturated in a blade mill to a particle size of 10 mm. The resulting product can be ground in a disc mill to the desired particle size.

In case of using a binding mixture, it is prepared by masticating EVA having 28% vinyl acetate and a fluidity index of 5 g/10 min with aliphatic resin and diluting the resulting paste with mineral oil. Peroxide and toluenosulphydracid are added to the mixture to crosslink and foam it.

The preforms are made by mixing the ground EVA with the binding mixture and laminating the product obtained.

In the third phase the pieces of scrap or the preform of the recycled base layer are loaded into a mould (in case of having the binding mixture) and are covered with the necessary sheets of the covering layer to provide the desired thickness. The thickness will be greater the greater the particle size, if a regular flat surface is to be obtained. The crosslinking process is carried out at a specific pressure of 50-60 kg/cm², at a temperature of 145°C and for a time that depends on the thickness of the covering layer.

The sheet obtained is then cut to form interlockable dovetails.

Below is an outline of the results obtained by comparing a floor covering of the type of example 2 just described (which shall be designated as floor covering C) and a floor covering of recycled rubber which shall be designated as floor covering D, manufactured by triturating rubber tyres.

| | Energy Absorption (UNE-EN 344) | Tear resistance (UNE 53516) | Abrasion resistance (UNE 53527) | Hardness (UNE 53130) | Density (UNE 53526) |
|---|---|---|---|---|---|
| | Joules | N/mm | mm³ | ShA ° | g/cm³ |
| Fl. cov. C | 15 | 30 | 150 | 78 | 0.53 |
| Fl. cov. D | 6 | 8 | 250 | 60 | 1.2 |

From the compared data it can be deduced that for floor covering C of the invention all the characteristics are superior, while its density, and therefore its weight, is less than half.

### Example 3

This example describes a compound floor covering applicable for cattle (beds for cows, etc.) for the formation of a rectangular tile with a thickness of 15 to 40 mm and a surface area of approximately 1 to 3 m², made up of a recycled base layer (BL) which occupies 50-90% of the total thickness in the interior of the sheet, covered to the top by a covering layer (CL) which occupies the remaining thickness. Both sides of the sheet are used.

The base layer or soft layer is a microcellular foam of EVA copolymer with 28% vinyl acetate, modified with polyisoprene rubber and plastified with mineral oil, crosslinked with peroxide and foamed with azodicarbonamide to a density of between 0.12 and 0.30 g/cm³ and a hardness which ranges between ShA 5 and 20°.

The covering layer or hard layer is a microcellular foam of EVA copolymer with 18% vinyl acetate, reinforced with a mineral filler of the siliceous and carbonate type, crosslinked with peroxide and foamed with azodicarbonamide to a density of between 0.12 and 0.30 g/cm³ and a hardness which ranges between ShA 35 and 60°.

Both the base layer and the covering layer can be formulated with the fillers and additives described in Example 1.

The manufacturing method comprises a first phase of making the preforms and a second phase of making the multi-layer compound.

The first phase involves, according to the known method, mixing polymers, fillers, peroxides, expanding agent, pigments and additives, both for making the base layer and the covering layer separately. This mixture is laminated in a calender to make the preforms, which are rectangular sheets 2 to 3 mm thick.

In the second phase the preforms of the covering layer are loaded into a mould, the preforms of the base layer are placed on top of them and on these another load the same as the first of the covering layer preforms. The volume of each of the preforms will depend on the desired thicknesses of the covering layer and the base layer. The process of crosslinking and expansion is carried out by heating at 165°C for a time that depends on the thickness and at a minimum specific pressure of 60 kg/cm².

A sheet of microcellular foam with two hardnesses is obtained. The soft layer in the interior provides the comfort and the hard layer provides the resistance at the use surface.

Below is an outline of the results obtained by comparing a floor covering of the type of example 3 just described and having a thickness of 30 mm (which shall be designated as floor covering E) and a conventional foamed floor covering of the same thickness, which shall be designated as floor covering F.

| | Energy Absorption (UNE-EN 344) | Tear resistance (UNE 53516) | Abrasion resistance (UNE 53527) | Hardness (UNE 53130) | Density (UNE 53526) |
|---|---|---|---|---|---|
| | Joules | N/mm | mm³ | ShA ° | g/cm³ |
| Fl. cov. E | 31.3 | 2 | 320 | 40/7 | 0.2 |
| Fl. cov. F | 30.6 | 2 | 320 | 40 | 0.2 |

The figure 40/7 means hardness 40 for the covering layer and hardness 7 for the base layer.

From the comparative figures it can be deduced that floor covering E of the invention achieves improved comfort by reducing the hardness of the base layer, while maintaining the energy absorption and mechanical properties necessary for use.

## Claims

1. Compound floor covering, especially for sports, child and livestock use, which comprises a plurality of superimposed layers of polymerisation resins, with at least one of the layers being the covering layer and another of the layers being the base layer, **characterised** in that the polymerisation resin of the various layers is a polymer, a copolymer or a terpolymer of polyolefin, the cover layer or layers comprising between 1% and 40% of vinyl acetate, with densities between 0.9 and 1.5 g/cm³ and hardnesses of Shore A 30 to 90°, while the foamed base layer has between 18% and 70% vinyl acetate, with densities ranging between 0.1 and 0.6 g/cm³ and hardnesses between Shore A 7 and 70° .

2. Floor covering according to claim 1, characterised in that the base layer has at least twice the thickness of the base layer or of each one of the covering layers.

3. Floor covering according to claim 1, characterised in that the base layer comprises between 70% and 90% of the total thickness.

4. Floor covering according to claim 1, characterised in that the covering and/or base layers comprise a natural or synthetic mineral filler and/or textile fibre layer.

5. Floor covering according to claim 1, characterised in that the covering layer or layers have a density of between 0.1 and 1.3 g/cm³.

6. Floor covering according to claim 1, characterised in that the base layer has a density of between 0.2 and 0.5 g/cm³.

7. Floor covering according to claim 1, characterised in that the polymerisation resin is modified with elastomers.

8. Floor covering according to claim 1, characterised in that the polymerisation resin is crosslinked with peroxides or by radiation.

9. Floor covering according to claim 1, characterised in that the polymerisation resin is a copolymer of ethylene-vinyl acetate (EVA).

10. Floor covering according to claim 1, characterised in that the base layer is made up of ground residues of foam of polymers agglomerated with or without a binding mixture.

11. Floor covering according to claim 10, characterised in that the binding mixture can be a mixture based on polyurethane, an emulsion of EVA copolymer or terpolymer, natural rubber, styrene-butadiene, nitrylic and/or chloroprene, all of them solids in dispersion or in solution; copolymers or terpolymers of EVA with mineral oils, natural and/or synthetic thermoplastic or heat-stable resins.

12. Floor covering according to claims 10 and 11, characterised in that the polymer of the residues is EVA and the binding mixture is obtained from aliphatic resin and EVA copolymer with a vinyl acetate content exceeding 25% and fluidity exceeding 2 g/10 min.

13. Floor covering according to claim 1, characterised in that the covering layer is a microcellular foam of EVA copolymer with 18% vinyl acetate reinforced with a mineral filler of the siliceous and carbonate type, crosslinked with peroxide and foamed with azodicarbonamide up to a density of between 0.12 and 0.30 g/cm³ and a hardness that ranges between ShA 30 and 60°.

14. Floor covering according to claim 1, characterised in that the base layer is a microcellular foam of EVA copolymer with 28% vinyl acetate modified with polyisoprene rubber and plastified with mineral oil, crosslinked with peroxide and foamed with azodicarbonamide up to a density between 0.12 and 0.30 g/cm³ and a hardness that ranges between ShA 5 and 20°.

15. Method for the manufacturing of compound floor coverings, which comprise a plurality of superimposed layers of polymerisation resins, with at least one of the layers being the covering layer and another of the layers being the base layer, which consists in:
a) Mixing separately polymerisation resins with other components such as fillers, crosslinking agent, expanding agent, pigments and additives, of each one of the layers.
b) Laminating said mixtures in order to make each one of the preforms.
c) Carrying out the crosslinking and expansion of the preform for the base layer.
d) Crosslinking the preform corresponding to the covering layer or layers and simultaneous joining of the covering layer or layers by hot welding to the base layer.

16. Method according to claim 15, characterised in that the crosslinking of the base layer is not implemented completely.

17. Method according to claim 15, characterised in that the crosslinking of the base layers is carried out up to a maximum crossover percentage of 80%.

18. Method according to claim 15, characterised in that the base layer comprises a maximum of 20 parts of filler for 100 of polymer.
